# EUROPEAN PATENT APPLICATION

(11) **EP 4 572 455 A1**
(43) Date of publication of application: **18.06.2025**
(21) Application number: 22954367.3
(22) Date of filing: 09.08.2022
(51) Int. Cl.: H04W 72/04

(54) **RANGING OR SIDELINK POSITIONING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: SHEN, Yang, Beijing 100085 (CN); LIU, Jianning, Beijing 100085 (CN)
(74) Representative: Dehns Germany Partnerschaft mbB
(86) International application number: PCT/CN2022/111282
(87) International publication number: WO 2024/031391

(57) **Abstract**

Embodiments of the present disclosure provide a ranging or sidelink positioning method. The method is implemented by a first terminal, and comprises: on the basis of a first predetermined result and/or a second predetermined result, determining whether to send notification information to a first network function, wherein the notification information is used for indicating that no positioning server terminal is available for a ranging or sidelink positioning terminal, the first predetermined result comprises a result that the ranging or sidelink positioning terminal supports or does not support a positioning server function, the second predetermined result comprises a result that the ranging or sidelink positioning terminal has discovered or has failed to discover a positioning server terminal, and the ranging or sidelink positioning terminal comprises the first terminal and a second terminal.

## Description

### TECHNICAL FIELD

The present disclosure relates to, but is not limited to, the technical field of wireless communication, and in particular, to a ranging or sidelink positioning method and apparatus, a communication device and a storage medium.

### BACKGROUND

In one scenario, ranging refers to determining a distance between two or more terminals, and/or a direction and/or relative positioning between one terminal and another terminal through a proximity communication 5 (PC5) interface. In the related art, a calculation of a ranging result may be performed by a location management function (LMF). When the ranging result is calculated based on the LMF, it is necessary to interact with the LMF in the network. Since a cumbersome interaction process is required, the time delay is long and the complexity is high.

### SUMMARY

Embodiments of the present disclosure disclose a ranging or sidelink positioning method and apparatus, a communication device and a storage medium.

According to a first aspect of the embodiments of the present disclosure, a ranging or sidelink positioning method is provided, where the method is performed by a first terminal, the method including:
determining whether to send notification information to a first network function based on a first predetermined result and/or a second predetermined result;
where the notification information is used to indicate that no location server terminal is available for a ranging or sidelink positioning terminal; the first predetermined result includes: a result that the ranging or sidelink positioning terminal supports or does not support a location server function; the second predetermined result includes: a result that the ranging or sidelink positioning terminal discovers or fails to discover a location server terminal; and the ranging or sidelink positioning terminal includes: the first terminal and a second terminal.

According to a second aspect of the embodiments of the present disclosure, a ranging or sidelink positioning method is provided, where the method is performed by a first network function, the method including:
receiving notification information sent by a first terminal, where the notification information is used to indicate that no location server terminal is available for a ranging or sidelink positioning terminal; and the ranging or sidelink positioning terminal includes: the first terminal and a second terminal; and
in response to receiving the notification information, involving a location management function (LMF) to perform a positioning operation of the ranging or sidelink positioning terminal; where the predetermined operation includes a ranging or sidelink positioning measurement and a measurement result calculation.

According to a third aspect of the embodiments of the present disclosure, a ranging or sidelink positioning method is provided, where the method is performed by a core network device, the method including:
receiving notification information sent by a first terminal through an access network, where the notification information is used to indicate that no location server terminal is available for a ranging or sidelink positioning terminal; and the ranging or sidelink positioning terminal includes: the first terminal and a second terminal; and
in response to receiving the notification information, performing a predetermined operation; where the predetermined operation includes a ranging or sidelink positioning measurement and a measurement result calculation. According to a fourth aspect of the embodiments of the present disclosure, a ranging or sidelink positioning apparatus is provided, where the apparatus includes:
a determination module, configured to determine whether to send notification information to a first network function based on a first predetermined result and/or a second predetermined result;
where the notification information is used to indicate that no location server terminal is available for a ranging or sidelink positioning terminal; the first predetermined result includes: a result that the ranging or sidelink positioning terminal supports or does not support a location server function; the second predetermined result includes: a result that the ranging or sidelink positioning terminal discovers or fails to discover a location server terminal; and the ranging or sidelink positioning terminal includes: the first terminal and a second terminal.

According to a fifth aspect of the embodiments of the present disclosure, a ranging or sidelink positioning apparatus is provided, where the apparatus includes:
a receiving module, configured to receive notification information sent by a first terminal, where the notification information is used to indicate that no location server terminal is available for a ranging or sidelink positioning terminal; and the ranging or sidelink positioning terminal includes: the first terminal and a second terminal; and
an involvement module, configured to: in response to receiving the notification information, involve a location management function (LMF) to perform a positioning operation of the ranging or sidelink positioning terminal; where the predetermined operation includes a ranging or sidelink positioning measurement and a measurement result calculation.

According to a sixth aspect of the embodiments of the present disclosure, a ranging or sidelink positioning apparatus is provided, where the apparatus includes:
a first network function, configured to:
receive notification information sent by a first terminal through an access network, where the notification information is used to indicate that no location server terminal is available for a ranging or sidelink positioning terminal; and the ranging or sidelink positioning terminal includes: the first terminal and a second terminal; and
in response to receiving the notification information, perform a predetermined operation; where the predetermined operation includes a ranging or sidelink positioning measurement and a measurement result calculation. According to a seventh aspect of the embodiments of the present disclosure, a communication device is provided, the communication device including:
   a processor; and
   a memory, configured to store executable instructions of the processor;
   where the processor is configured to implement the method according to any embodiment of the present disclosure when the executable instructions are executed.

According to an eighth aspect of the embodiments of the present disclosure, there is provided a computer storage medium storing a computer-executable program which, when executed by a processor, implements the method described in any embodiment of the present disclosure.

In the embodiments of the present disclosure, based on a first predetermined result and/or a second predetermined result, it is determined whether to send notification information to a first network function; where the notification information is used to indicate that no location server terminal is available for a ranging or sidelink positioning terminal; the first predetermined result includes: a result that the ranging or sidelink positioning terminal supports or does not support a location server function; the second predetermined result includes: a result that the ranging or sidelink positioning terminal discovers or fails to discover a location server terminal; and the ranging or sidelink positioning terminal includes: the first terminal and a second terminal. Here, whether to send the notification information to the first network function is determined based on the first predetermined result and/or the second predetermined result, that is, whether to send the notification information to the first network function needs to adapt to the result that the ranging or sidelink positioning terminal supports or does not support the location server function, and/or the result that the ranging or sidelink positioning terminal discovers or fails to discover the location server terminal. In this way, if the ranging or sidelink positioning terminal supports the location server function, ranging or sidelink positioning can be performed without using LMF; or, if the ranging or sidelink positioning terminal supports the location server function and discovers the location server terminal, ranging or sidelink positioning can also be performed without using LMF. Compared with the method of directly determining to use the LMF for ranging or sidelink positioning when performing the ranging or sidelink positioning, time delay and complexity can be reduced.

### BRIEF DESCRIPTION OF THE DRAWINGS

FIG. 1 is a schematic structural diagram of a wireless communication system according to an exemplary embodiment.
FIG. 2 is a schematic diagram of a scenario of a sidelink positioning according to an exemplary embodiment.
FIG. 3 is a schematic flowchart of a ranging or sidelink positioning method according to an exemplary embodiment.
FIG. 4 is a schematic flowchart of a ranging or sidelink positioning method according to an exemplary embodiment.
FIG. 5 is a schematic flowchart of a ranging or sidelink positioning method according to an exemplary embodiment.
FIG. 6 is a schematic flowchart of a ranging or sidelink positioning method according to an exemplary embodiment.
FIG. 7 is a schematic flowchart of a ranging or sidelink positioning method according to an exemplary embodiment.
FIG. 8 is a schematic flowchart of a ranging or sidelink positioning method according to an exemplary embodiment.
FIG. 9 is a schematic flowchart of a ranging or sidelink positioning method according to an exemplary embodiment.
FIG. 10 is a schematic flowchart of a ranging or sidelink positioning method according to an exemplary embodiment.
FIG. 11 is a schematic flowchart of a ranging or sidelink positioning method according to an exemplary embodiment.
FIG. 12 is a schematic flowchart of a ranging or sidelink positioning method according to an exemplary embodiment.
FIG. 13 is a schematic structural diagram of a ranging or sidelink positioning apparatus according to an exemplary embodiment.
FIG. 14 is a schematic structural diagram of a ranging or sidelink positioning apparatus according to an exemplary embodiment.
FIG. 15 is a schematic structural diagram of a ranging or sidelink positioning apparatus according to an exemplary embodiment.
FIG. 16 is a schematic structural diagram of a terminal according to an exemplary embodiment.
FIG. 17 is a block diagram of a base station according to an exemplary embodiment.

### DETAILED DESCRIPTION

Exemplary embodiments will be described in detail herein, examples of which are represented in the accompanying drawings. When the following description relates to the accompanying drawings, the same numerals in different drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with the appended claims and some aspects of the embodiments of the present disclosure.

Terms used in the embodiments of the present disclosure are used solely for the purpose of describing certain embodiments and are not intended to limit the embodiments of the present disclosure. The singular forms of "a/an", "one" and "the" used in the appended claims and the embodiments of the present disclosure are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "when..." or "in the case..." or "in response to determination".

For the purpose of conciseness and better understanding, the term "greater than" or "less than" is used herein to represent a size relationship. However, for those skilled in the art, it can be understood that the term "greater than" also covers the meaning of "greater than or equal to" and the term "less than" also covers the meaning of "less than or equal to".

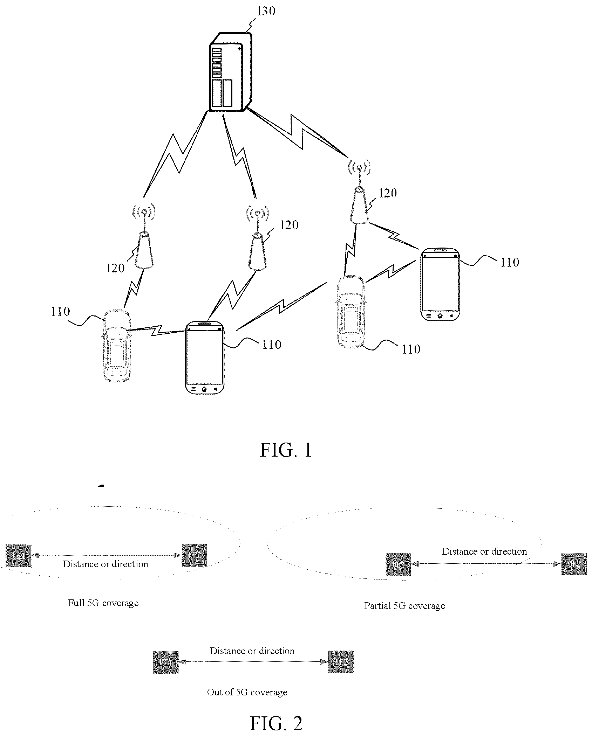

Referring to FIG. 1, a schematic structural diagram of a wireless communication system provided by an embodiment of the present disclosure is illustrated. As shown in FIG. 1, the wireless communication system is a communication system based on mobile communication technology, and the wireless communication system may include: several user equipments 110 and several base stations 120.

The user equipment 110 may refer to a device that provides voice and/or data connectivity to a user. The user equipment 110 may communicate with one or more core networks via a radio access network (RAN). The user equipment 110 may be an Internet of Things (IoT) user equipment, such as a sensor device, a mobile phone, and a computer with an IoT user equipment, for example, it may be a fixed, portable, pocket-sized, handheld, computer-built-in, or vehicle-mounted apparatus, e.g., a station (STA), a subscriber unit, a subscriber station, a mobile station, a mobile, a remote station, an access point, a remote user equipment (remote terminal), an access user equipment (access terminal), a user terminal, a user agent, a user device or a user equipment. Alternatively, the user equipment 110 may be a device of an unmanned aerial vehicle. Alternatively, the user equipment 110 may be a vehicle-mounted device, for example, it may be a trip computer with a wireless communication function, or a wireless user equipment externally connected to a trip computer. Alternatively, the user equipment 110 may be a roadside device, for example, a street lamp, a signal lamp, or other roadside device with a wireless communication function.

The base station 120 may be a network side device in a wireless communication system. The wireless communication system may be the 4th generation mobile communication technology (4G) system, also known as a long term evolution (LTE) system; or, the wireless communication system may be a 5G system, also known as a new air interface system or a 5G NR system. Alternatively, the wireless communication system may be a next generation system of the 5G system. The access network in the 5G system may be referred to as a new generation-radio access network (NG-RAN).

The base station 120 may be an evolved base station (eNB) used in a 4G system. Alternatively, the base station 120 may also be a base station (gNB) using a centralized and distributed architecture in a 5G system. When the base station 120 uses the centralized and distributed architecture, it usually includes a central unit (CU) and at least two distributed units (DUs). The central unit is provided with protocol stacks of a packet data convergence protocol (PDCP) layer, a radio link layer control protocol (Radio Link Control, RLC) layer, and a media access control (MAC) layer; and the distributed unit is provided with a protocol stack of a physical (PHY) layer. The specific implementation manner of the base station 120 is not limited by the embodiments of the present disclosure.

A wireless connection may be established between the base station 120 and the user equipment 110 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

In some embodiments, an End to End (E2E) connection may also be established between the user equipments 110, for example, a vehicle to vehicle (V2V) communication, a vehicle to Infrastructure (V2I) communication and a vehicle to pedestrian (V2P) communication in a vehicle to everything communication.

Here, the above-mentioned user equipment may be considered as the terminal device of the following embodiments.

In some embodiments, the above-mentioned wireless communication system may further include a network management device 130.

Several base stations 120 are respectively connected with the network management device 130. The network management device 130 may be a core network device in the wireless communication system. For example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF) or a home subscriber server (HSS). The embodiments of the present disclosure do not limit the implementation form of the network management device 130.

In order to facilitate the understanding of those skilled in the art, the embodiments of the present disclosure list a plurality of implementations to clearly explain the technical solutions of the embodiments of the present disclosure. Those skilled in the art may understand that the implementations provided by the embodiments of the present disclosure may be performed alone, or may be performed together after being combined with the methods of other embodiments in the embodiments of the present disclosure, or may also be executed alone or in combination with some methods of other related technologies, which is not limited by the embodiments of the present disclosure.

In order to better understand the technical solution described in any embodiment of the present disclosure, firstly, the application scenarios in related art are described in the following.

In one embodiment, the ranging or sidelink positioning uses a PC5 positioning terminal.

The following terms are used for the ranging or sidelink positioning.

A reference terminal is a terminal that determines a reference plane and a reference direction in a ranging-based service and sidelink positioning.

A target terminal is a terminal whose distance, direction and/or position is measured comparing to the reference plane, the reference direction and/or position of the reference terminal in the ranging-based service and sidelink positioning.

It should be noted that any terminal participating in the ranging or sidelink positioning may be either the target terminal or the reference terminal, and can switch roles in a same ranging or sidelink positioning session.

An assistant terminal is a terminal that provides assistance for the ranging or sidelink positioning when direct ranging or sidelink positioning between the reference terminal and the target terminal cannot be supported.

A positioning terminal is a terminal that knows or can know its location using Uu-based positioning. The positioning terminal may be used to determine a location of a target UE using ranging or sidelink.

A location server terminal is a terminal that provides a location server function to replace the LMF, and is used for sidelink positioning and ranging through sidelink. The location server terminal interacts with the target terminal, the reference terminal, the assistant terminal and the positioning terminal as needed to calculate a location of the target terminal.

Sidelink positioning refers to positioning a terminal by using the PC5.

In one embodiment, referring to FIG. 2, a ranging and sidelink location service may be supported regardless of network (e.g., 5G) coverage. FIG. 2 is a schematic diagram of 5G providing a ranging service to a terminal within or without 5G coverage. If licensed frequency bands are used for ranging, they should be completely under the control of the operator.

In one embodiment, a process of ranging or sidelink positioning may include the following steps:
step a: a request/response for ranging or sidelink positioning (e.g., received/sent from/to a third-party UE, an access and mobility management function (AMF), and an LMF);
step b: a measurement between two UEs or between one UE and a plurality of UEs; and
step c: a result calculation (e.g., in a location server UE and/or LMF), where the location server UE supports at least one of the following functions:
   function 1: receiving/sending the ranging/sidelink positioning request/response from/to a UE or LMF; and
   function 2: a result calculation.

The location server UE may be concatenated with the reference UE or the target UE, or may be an independent UE.

Although the result calculation may be performed at the location server UE, LMF, or both, the involvement of the LMF in the result calculation should be avoided as much as possible to reduce delay and complexity in the network.

Therefore, how to determine whether the LMF is involved to expose the ranging or sidelink positioning between two UEs or between one UE and a plurality of UEs to a third-party UE, an application function (AF) or a 5G core network function (NF) is a question that needs to be considered.

It should be noted that the sidelink in the present disclosure may also be understood as a direct link or a sidelink, which is not limited herein.

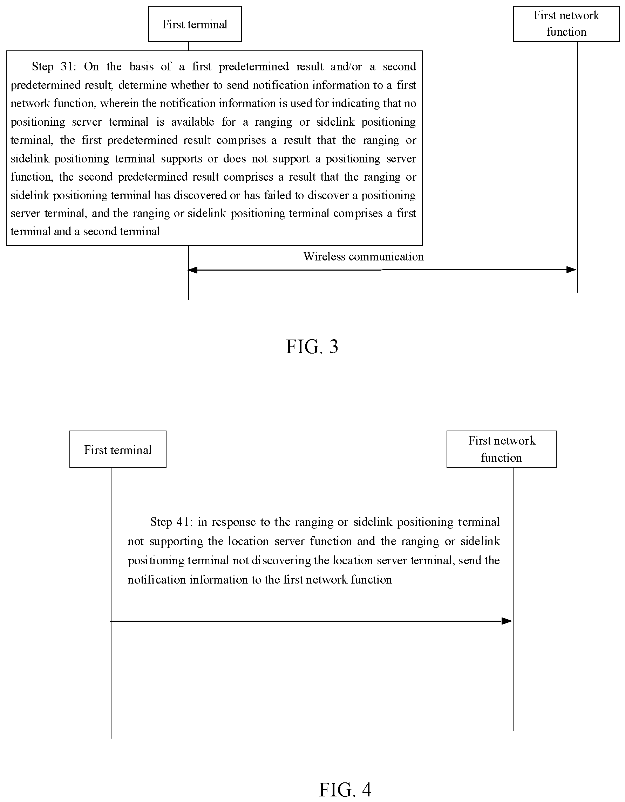

As shown in FIG. 3, this embodiment provides a ranging or sidelink positioning method, where the method is performed by a first terminal, and the method includes the following step 31.

In step 31, it is determined whether to send notification information to a first network function based on a first predetermined result and/or a second predetermined result.

The notification information is used to indicate that no location server terminal is available for a ranging or sidelink positioning terminal; the first predetermined result includes: a result that the ranging or sidelink positioning terminal supports or does not support a location server function; the second predetermined result includes: a result that the ranging or sidelink positioning terminal discovers or fails to discover a location server terminal; and the ranging or sidelink positioning terminal includes: the first terminal and a second terminal.

Here, the terminal involved in the embodiments of the present disclosure may be, but is not limited to, a mobile phone, a wearable device, a vehicle-mounted terminal, a road side unit (RSU), a smart home terminal, an industrial sensing device and/or a medical device. In some embodiments, the terminal may be a redcap terminal or a new air interface NR terminal of a predetermined version (e.g., the NR terminal of R17).

The base station involved in the present disclosure may be various types of base stations, for example, a base station of the third generation mobile communication (3G) network, a base station of the fourth generation mobile communication (4G) network, a base station of the fifth generation mobile communication (5G) network or other evolved base stations.

The network function involved in the present disclosure may be various types of network functions, for example, a network function of the fifth generation mobile communication (5G) network or other evolved network functions. The network function may be the AMF or the LMF, etc.

In one embodiment, in response to receiving ranging or sidelink positioning request information sent by a first network function, it is determined whether to send notification information to the first network function based on a first predetermined result and/or a second predetermined result. The notification information is used to indicate that a ranging or sidelink positioning terminal has no location server terminal available. The first predetermined result includes: a result that the ranging or sidelink positioning terminal supports or does not support a location server function. The second predetermined result includes: a result that the ranging or sidelink positioning terminal discovers or fails to discover the location server terminal. The ranging or sidelink positioning terminal includes: the first terminal and a second terminal. It should be noted that the ranging or sidelink positioning request information may indicate the first terminal and the second terminal.

In one embodiment, in response to receiving ranging or sidelink positioning request information from a third-party terminal, it is determined whether to send notification information to a first network function based on a first predetermined result and/or a second predetermined result. The notification information is used to indicate that a ranging or sidelink positioning terminal has no location server terminal available. The first predetermined result includes: a result that the ranging or sidelink positioning terminal supports or does not support a location server function. The second predetermined result includes: a result that the ranging or sidelink positioning terminal discovers or fails to discover the location server terminal. The ranging or sidelink positioning terminal includes: the first terminal and a second terminal. It should be noted that the ranging or sidelink positioning request information may indicate the first terminal and the second terminal.

In one embodiment, in response to performing ranging/sidelink positioning between the first terminal and the second terminal, based on a first predetermined result and/or a second predetermined result, it is determined whether to send notification information to the first network function. The notification information is used to indicate that the ranging or sidelink positioning terminal has no location server terminal available. The first predetermined result includes: a result that the ranging or sidelink positioning terminal supports or does not support a location server function. The second predetermined result includes: a result that the ranging or sidelink positioning terminal discovers or fails to discover the location server terminal. The ranging or sidelink positioning terminal includes: the first terminal and the second terminal.

In one embodiment, in response to the ranging or sidelink positioning terminal not supporting the location server function and the ranging or sidelink positioning terminal not discovering the location server terminal, the notification information is sent to the first network function. The notification information is used to indicate that the ranging or sidelink positioning terminal has no location server terminal available. The ranging or sidelink positioning terminal includes the first terminal and the second terminal.

In one embodiment, in response to the ranging or sidelink positioning terminal not supporting the location server function and the ranging or sidelink positioning terminal not discovering the location server terminal, the notification information is sent to the first network function. The notification information is used to indicate that the ranging or sidelink positioning terminal has no location server terminal available. A predetermined operation is performed among the first terminal, the second terminal and a location management function (LMF) to obtain a ranging and positioning result. The predetermined operation includes a ranging or sidelink positioning measurement and a measurement result calculation.

In one embodiment, in response to the ranging or sidelink positioning terminal not supporting the location server function and the ranging or sidelink positioning terminal not discovering the location server terminal, the notification information is sent to the first network function. The notification information is used to indicate that the ranging or sidelink positioning terminal has no location server terminal available. A predetermined operation is performed among the first terminal, the second terminal and a location management function (LMF) to obtain a ranging and positioning result. The predetermined operation includes a ranging or sidelink positioning measurement and a measurement result calculation. Information about the ranging or sidelink positioning result is sent to the first network function.

In one embodiment, in response to the ranging or sidelink positioning terminal not supporting the location server function and the ranging or sidelink positioning terminal not discovering the location server terminal, the notification information is sent to the first network function. The notification information is used to indicate that the ranging or sidelink positioning terminal has no location server terminal available. A predetermined operation is performed among the first terminal, the second terminal and the location management function (LMF) to obtain a ranging and positioning result. The predetermined operation includes a ranging or sidelink positioning measurement and a measurement result calculation. Information about the ranging or sidelink positioning result is sent to a third-party terminal.

In one embodiment, in response to receiving ranging or sidelink positioning request information sent by a first network function and the ranging or sidelink positioning terminal not supporting the location server function and the ranging or sidelink positioning terminal not discovering a location server terminal, the notification information is sent to the first network function. The notification information is used to indicate that the ranging or sidelink positioning terminal has no location server terminal available. A predetermined operation is performed among the first terminal, the second terminal and the location management function (LMF) to obtain a ranging and positioning result. The predetermined operation includes a ranging or sidelink positioning measurement and a measurement result calculation.

In one embodiment, in response to receiving ranging or sidelink positioning request information from a third-party terminal and the ranging or sidelink positioning terminal not supporting the location server function and the ranging or sidelink positioning terminal not discovering a location server terminal, the notification information is sent to the first network function. The notification information is used to indicate that the ranging or sidelink positioning terminal has no location server terminal available. A predetermined operation is performed among the first terminal, the second terminal and the location management function (LMF) to obtain a ranging and positioning result. The predetermined operation includes a ranging or sidelink positioning measurement and a measurement result calculation.

In one embodiment, in response to the ranging or sidelink positioning terminal supporting the location server function, a predetermined operation is performed between the first terminal and the second terminal to obtain a ranging or sidelink positioning result. The predetermined operation includes a ranging or sidelink positioning measurement and a measurement result calculation.

In one embodiment, in response to the ranging or sidelink positioning terminal supporting the location server function, a predetermined operation is performed between the first terminal and the second terminal to obtain a ranging or sidelink positioning result. The predetermined operation includes a ranging or sidelink positioning measurement and a measurement result calculation. Information about the ranging or sidelink positioning result is sent to the first network function.

In one embodiment, in response to the ranging or sidelink positioning terminal supporting the location server function, a predetermined operation is performed between the first terminal and the second terminal to obtain a ranging or sidelink positioning result. The predetermined operation includes a ranging or sidelink positioning measurement and a measurement result calculation. Information about the ranging or sidelink positioning result is sent to a third-party terminal.

In one embodiment, in response to receiving ranging or sidelink positioning request information sent by a first network function and the ranging or sidelink positioning terminal supporting the location server function, a predetermined operation is performed between the first terminal and the second terminal to obtain a ranging or sidelink positioning result. The predetermined operation includes a ranging or sidelink positioning measurement and a measurement result calculation.

In one embodiment, in response to receiving ranging or sidelink positioning request information from a third-party terminal and the ranging or sidelink positioning terminal supporting the location server function, a predetermined operation is performed between the first terminal and the second terminal to obtain a ranging or sidelink positioning result. The predetermined operation includes a ranging or sidelink positioning measurement and a measurement result calculation.

In one embodiment, in response to the ranging or sidelink positioning terminal not supporting the location server function and the ranging or sidelink positioning terminal discovering the location server terminal, a predetermined operation is performed among the first terminal, the second terminal and the location server terminal to obtain a ranging or sidelink positioning result. The predetermined operation includes a ranging or sidelink positioning measurement and a measurement result calculation.

In one embodiment, in response to the ranging or sidelink positioning terminal not supporting the location server function and the ranging or sidelink positioning terminal discovering a location server terminal, a predetermined operation is performed among the first terminal, the second terminal and the location server terminal to obtain a ranging or sidelink positioning result. The predetermined operation includes a ranging or sidelink positioning measurement and a measurement result calculation. Information about the ranging or sidelink positioning result is sent to the first network function.

In one embodiment, in response to the ranging or sidelink positioning terminal not supporting the location server function and the ranging or sidelink positioning terminal discovering a location server terminal, a predetermined operation is performed among the first terminal, the second terminal and the location server terminal to obtain a ranging or sidelink positioning result. The predetermined operation includes a ranging or sidelink positioning measurement and a measurement result calculation. Information about the ranging or sidelink positioning result is sent to a third-party terminal.

In one embodiment, in response to receiving ranging or sidelink positioning request information sent by a first network function and the ranging or sidelink positioning terminal not supporting the location server function and the ranging or sidelink positioning terminal discovering a location server terminal, a predetermined operation is performed among the first terminal, the second terminal and the location server terminal to obtain a ranging or sidelink positioning result. The predetermined operation includes a ranging or sidelink positioning measurement and a measurement result calculation.

In one embodiment, in response to receiving ranging or sidelink positioning request information from a third-party terminal and the ranging or sidelink positioning terminal not supporting the location server function and the ranging or sidelink positioning terminal discovering a location server terminal, a predetermined operation is performed among the first terminal, the second terminal and the location server terminal to obtain a ranging or sidelink positioning result. The predetermined operation includes a ranging or sidelink positioning measurement and a measurement result calculation.

In one embodiment, in response to receiving ranging or sidelink positioning request information sent by the first network function or ranging or sidelink positioning request information of a third-party terminal, the second terminal is discovered. It is determined whether the ranging or sidelink positioning terminal supports the location server function, and the first predetermined result is obtained. Based on the first predetermined result and/or the second predetermined result, it is determined whether to send notification information to the first network function. The notification information is used to indicate that the ranging or sidelink positioning terminal has no location server terminal available. The first predetermined result includes: a result that the ranging or sidelink positioning terminal supports or does not support the location server function. The second predetermined result includes: a result that the ranging or sidelink positioning terminal discovers or fails to discover a location server terminal. The ranging or sidelink positioning terminal includes: the first terminal and the second terminal.

In one embodiment, in response to receiving ranging or sidelink positioning request information sent by the first network function or ranging or sidelink positioning request information of a third-party terminal, the second terminal is discovered. It is determined whether the ranging or sidelink positioning terminal supports the location server function, and the first predetermined result is obtained. In response to the ranging or sidelink positioning terminal not supporting the location service function, a discovery operation of the location server terminal is performed to obtain the second predetermined result. Based on the first predetermined result and/or the second predetermined result, it is determined whether to send notification information to the first network function. The notification information is used to indicate that the ranging or sidelink positioning terminal has no location server terminal available. The first predetermined result includes: a result that the ranging or sidelink positioning terminal supports or does not support the location server function. The second predetermined result includes: the result that the ranging or sidelink positioning terminal discovers or fails to discover a location server terminal. The ranging or sidelink positioning terminal includes: the first terminal and the second terminal.

It should be noted that the discovery operation of the location server terminal may be performed based on a Mode A proximity communication service (ProSe) discovery, or the discovery operation of the location server terminal may be performed based on a Mode B proximity communication service (ProSe) discovery. In one embodiment, a result of the discovery operation may be indicated based on additional information.

In one embodiment, the first terminal sends (may broadcast) a discovery request information. The discovery request information indicates a capability of the location server terminal to be discovered (the capability may be indicated by a newly added parameter). A location server terminal with the capability, upon receiving the discovery request information, determines whether the location server terminal itself has the capability. In response to determining that the location server terminal has the capability, the location server terminal sends discovery response information to the first terminal. The first terminal receives the discovery response information sent by the location server terminal. In response to the first terminal receiving the discovery response information, it is determined that the location server terminal is discovered.

It should be noted that if the terminal receives the discovery request information and determines that the terminal does not have the capability, the discovery request information will be ignored.

In one embodiment, in response to discovering a plurality of location server terminals, the location server terminal for ranging or sidelink positioning is selected based on predetermined information. The predetermined information includes at least one of the following: capability information of the location server terminal, an identity identifier (ID) of the preconfigured location server terminal, a distance between the location server terminal and the ranging or sidelink positioning terminal, or a signal strength between the location server terminal and the ranging or sidelink positioning terminal. In response to the ranging or sidelink positioning terminal not supporting the location server function and the ranging or sidelink positioning terminal discovering the location server terminal, a predetermined operation among the first terminal, the second terminal and the location server terminal is performed to obtain a ranging or sidelink positioning result. The predetermined operation includes a ranging or sidelink positioning measurement and a measurement result calculation.

In the embodiments of the present disclosure, based on a first predetermined result and/or a second predetermined result, it is determined whether to send notification information to a first network function; where the notification information is used to indicate that no location server terminal is available for a ranging or sidelink positioning terminal; the first predetermined result includes: a result that the ranging or sidelink positioning terminal supports or does not support a location server function; the second predetermined result includes: a result that the ranging or sidelink positioning terminal discovers or fails to discover a location server terminal; and the ranging or sidelink positioning terminal includes: the first terminal and a second terminal. Here, whether to send the notification information to the first network function is determined based on the first predetermined result and/or the second predetermined result, that is, whether to send the notification information to the first network function needs to adapt to the result that the ranging or sidelink positioning terminal supports or does not support the location server function, and/or the result that the ranging or sidelink positioning terminal discovers or fails to discover the location server terminal. In this way, if the ranging or sidelink positioning terminal supports the location server function, ranging or sidelink positioning can be performed without using LMF; or, if the ranging or sidelink positioning terminal supports the location server function and discovers the location server terminal, ranging or sidelink positioning can be performed without using LMF. Compared with the method of directly determining to use the LMF for ranging or sidelink positioning when performing the ranging or sidelink positioning, time delay and complexity can be reduced.

It should be noted that those skilled in the art can understand that the methods provided by the embodiments of the present disclosure may be executed alone or together with some methods in the embodiments of the present disclosure or some methods in related art.

As shown in FIG. 4, a ranging or sidelink positioning method is provided in this embodiment. The method is performed by a first terminal, and the method includes the following step 41.

In step 41, in response to the ranging or sidelink positioning terminal not supporting the location server function and the ranging or sidelink positioning terminal not discovering the location server terminal, the notification information is sent to the first network function.

In one embodiment, in response to the ranging or sidelink positioning terminal not supporting the location server function and the ranging or sidelink positioning terminal not discovering the location server terminal, the notification information is sent to the first network function, where the notification information is used to indicate that the ranging or sidelink positioning terminal has no location server terminal available. A predetermined operation is performed among the first terminal, the second terminal and the location management function (LMF) to obtain a ranging and positioning result; where the predetermined operation includes a ranging or sidelink positioning measurement and a measurement result calculation.

In one embodiment, in response to the ranging or sidelink positioning terminal not supporting the location server function and the ranging or sidelink positioning terminal not discovering the location server terminal, the notification information is sent to the first network function, where the notification information is used to indicate that the ranging or sidelink positioning terminal has no location server terminal available. A predetermined operation is performed among the first terminal, the second terminal and the location management function (LMF) to obtain a ranging and positioning result; where the predetermined operation includes a ranging or sidelink positioning measurement and a measurement result calculation. Information about the ranging or sidelink positioning result is sent to the first network function.

In one embodiment, in response to the ranging or sidelink positioning terminal not supporting the location server function and the ranging or sidelink positioning terminal not discovering the location server terminal, the notification information is sent to the first network function, where the notification information is used to indicate that the ranging or sidelink positioning terminal has no location server terminal available. A predetermined operation is performed among the first terminal, the second terminal and the location management function (LMF) to obtain a ranging and positioning result; where the predetermined operation includes a ranging or sidelink positioning measurement and a measurement result calculation. Information about the ranging or sidelink positioning result is sent to a third-party terminal.

It should be noted that those skilled in the art can understand that the methods provided by the embodiments of the present disclosure may be executed alone or together with some methods in the embodiments of the present disclosure or some methods in related art.

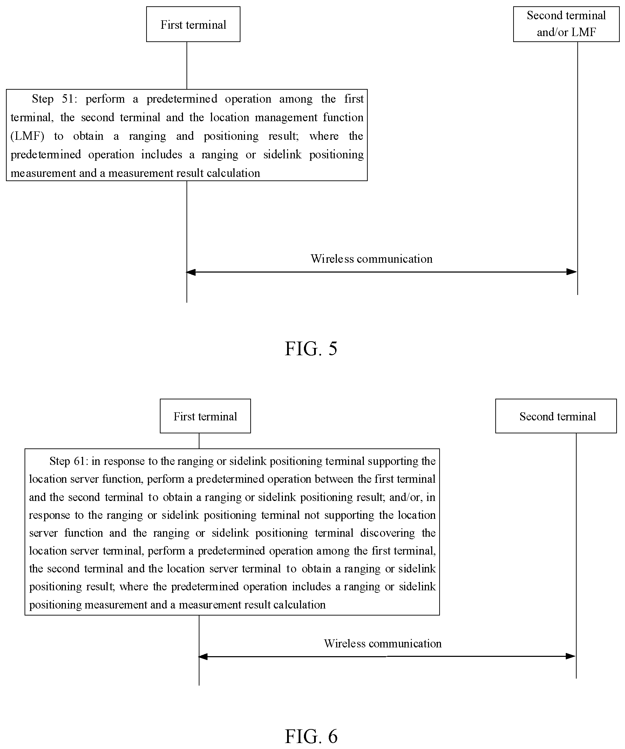

As show in FIG. 5, this embodiment provides a ranging or sidelink positioning method, where the method is performed by a first terminal, and the method includes the following step 51.

In step 51, a predetermined operation among the first terminal, the second terminal and the location management function (LMF) is performed to obtain a ranging and positioning result; where the predetermined operation includes a ranging or sidelink positioning measurement and a measurement result calculation.

In one embodiment, in response to receiving ranging or sidelink positioning request information sent by a first network function and the ranging or sidelink positioning terminal not supporting a location server function and the ranging or sidelink positioning terminal not discovering a location server terminal, the notification information is sent to the first network function, where the notification information is used to indicate that the ranging or sidelink positioning terminal has no location server terminal available. A predetermined operation is performed among the first terminal, the second terminal and the location management function (LMF) to obtain a ranging and positioning result; where the predetermined operation includes a ranging or sidelink positioning measurement and a measurement result calculation.

In one embodiment, in response to receiving ranging or sidelink positioning request information from a third-party terminal and the ranging or sidelink positioning terminal not supporting the location server function and the ranging or sidelink positioning terminal not discovering the location server terminal, the notification information is sent to the first network function, where the notification information is used to indicate that the ranging or sidelink positioning terminal has no location server terminal available. A predetermined operation is performed among the first terminal, the second terminal and the location management function (LMF) to obtain a ranging and positioning result; where the predetermined operation includes a ranging or sidelink positioning measurement and a measurement result calculation.

It should be noted that those skilled in the art can understand that the methods provided by the embodiments of the present disclosure may be executed alone or together with some methods in the embodiments of the present disclosure or some methods in related art.

As shown in FIG. 6, this embodiment provides a ranging or sidelink positioning method, where the method is performed by a first terminal, and the method includes the following step 61.

In step 61, in response to the ranging or sidelink positioning terminal supporting the location server function, a predetermined operation between the first terminal and the second terminal is performed to obtain a ranging or sidelink positioning result; and/or, in response to the ranging or sidelink positioning terminal not supporting the location server function and the ranging or sidelink positioning terminal discovering the location server terminal, a predetermined operation among the first terminal, the second terminal and the location server terminal is performed to obtain a ranging or sidelink positioning result; where the predetermined operation includes a ranging or sidelink positioning measurement and a measurement result calculation.

In one embodiment, in response to the ranging or sidelink positioning terminal supporting the location server function, a predetermined operation is performed between the first terminal and the second terminal to obtain a ranging or sidelink positioning result; where the predetermined operation includes a ranging or sidelink positioning measurement and a measurement result calculation; and information about the ranging or sidelink positioning result is sent to the first network function.

In one embodiment, in response to the ranging or sidelink positioning terminal supporting the location server function, a predetermined operation is performed between the first terminal and the second terminal to obtain a ranging or sidelink positioning result; where the predetermined operation includes a ranging or sidelink positioning measurement and a measurement result calculation; and information about the ranging or sidelink positioning result is sent to a third-party terminal.

In one embodiment, in response to receiving ranging or sidelink positioning request information sent by a first network function and the ranging or sidelink positioning terminal supporting a location server function, a predetermined operation is performed between the first terminal and the second terminal to obtain a ranging or sidelink positioning result; where the predetermined operation includes a ranging or sidelink positioning measurement and a measurement result calculation.

In one embodiment, in response to receiving ranging or sidelink positioning request information from a third-party terminal and the ranging or sidelink positioning terminal supporting the location server function, a predetermined operation is performed between the first terminal and the second terminal to obtain a ranging or sidelink positioning result; where the predetermined operation includes a ranging or sidelink positioning measurement and a measurement result calculation.

In one embodiment, in response to the ranging or sidelink positioning terminal not supporting the location server function and the ranging or sidelink positioning terminal discovering the location server terminal, a predetermined operation is performed among the first terminal, the second terminal and the location server terminal to obtain a ranging or sidelink positioning result; where the predetermined operation includes a ranging or sidelink positioning measurement and a measurement result calculation; and information about the ranging or sidelink positioning result is sent to the first network function.

In one embodiment, in response to the ranging or sidelink positioning terminal not supporting the location server function and the ranging or sidelink positioning terminal discovering the location server terminal, a predetermined operation is performed among the first terminal, the second terminal and the location server terminal to obtain a ranging or sidelink positioning result; where the predetermined operation includes a ranging or sidelink positioning measurement and a measurement result calculation; and information about the ranging or sidelink positioning result is sent to a third-party terminal.

In one embodiment, in response to receiving ranging or sidelink positioning request information sent by a first network function and the ranging or sidelink positioning terminal not supporting the location server function and the ranging or sidelink positioning terminal discovering the location server terminal, a predetermined operation is performed among the first terminal, the second terminal and the location server terminal to obtain a ranging or sidelink positioning result; where the predetermined operation includes a ranging or sidelink positioning measurement and a measurement result calculation.

In one embodiment, in response to receiving ranging or sidelink positioning request information from a third-party terminal and the ranging or sidelink positioning terminal not supporting the location server function and the ranging or sidelink positioning terminal discovering the location server terminal, a predetermined operation is performed among the first terminal, the second terminal and the location server terminal to obtain a ranging or sidelink positioning result; where the predetermined operation includes a ranging or sidelink positioning measurement and a measurement result calculation.

It should be noted that those skilled in the art can understand that the methods provided by the embodiments of the present disclosure may be executed alone or together with some methods in the embodiments of the present disclosure or some methods in related art.

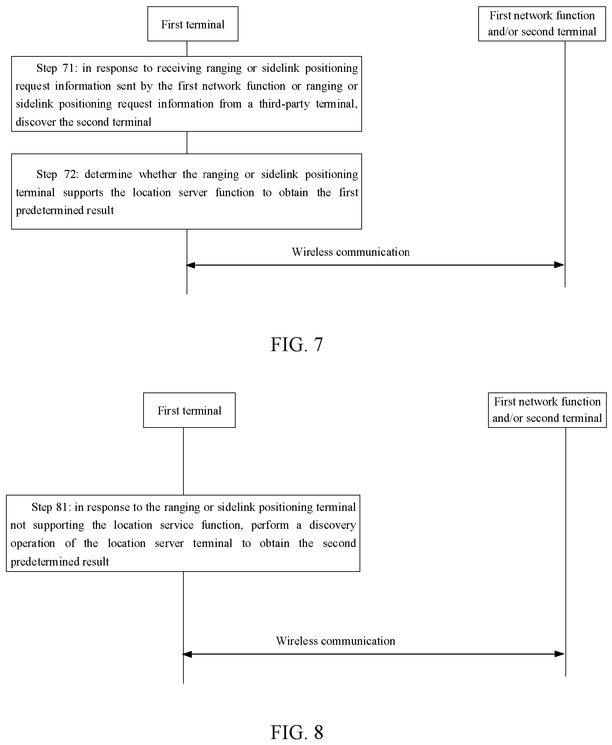

As shown in FIG. 7, this embodiment provides a ranging or sidelink positioning method, where the method is performed by a first terminal, and the method includes the following step 71 to step 72.

In step 71, in response to receiving ranging or sidelink positioning request information sent by the first network function or ranging or sidelink positioning request information of a third-party terminal, the second terminal is discovered.

In step 72, it is determined whether the ranging or sidelink positioning terminal supports the location server function, and the first predetermined result is obtained.

In one embodiment, in response to receiving ranging or sidelink positioning request information sent by the first network function or ranging or sidelink positioning request information of a third-party terminal, the second terminal is discovered. It is determined whether the ranging or sidelink positioning terminal supports the location server function, and the first predetermined result is obtained. Based on the first predetermined result and/or the second predetermined result, it is determined whether to send notification information to the first network function. The notification information is used to indicate that the ranging or sidelink positioning terminal has no location server terminal available. The first predetermined result includes: a result that the ranging or sidelink positioning terminal supports or does not support the location server function. The second predetermined result includes: a result that the ranging or sidelink positioning terminal discovers or fails to discover the location server terminal. The ranging or sidelink positioning terminal includes: the first terminal and a second terminal.

In one embodiment, in response to receiving ranging or sidelink positioning request information sent by the first network function or ranging or sidelink positioning request information of a third-party terminal, the second terminal is discovered. It is determined whether the ranging or sidelink positioning terminal supports the location server function, and the first predetermined result is obtained. In response to the ranging or sidelink positioning terminal not supporting the location service function, the discovery operation of the location server terminal is performed to obtain the second predetermined result. Based on the first predetermined result and/or the second predetermined result, it is determined whether to send notification information to the first network function; where the notification information is used to indicate that the ranging or sidelink positioning terminal has no location server terminal available. The first predetermined result includes: a result that the ranging or sidelink positioning terminal supports or does not support the location server function. The second predetermined result includes: the result that the ranging or sidelink positioning terminal discovers or fails to discover the location server terminal. The ranging or sidelink positioning terminal includes: the first terminal and a second terminal.

It should be noted that those skilled in the art can understand that the methods provided by the embodiments of the present disclosure may be executed alone or together with some methods in the embodiments of the present disclosure or some methods in related art.

As shown in FIG8, this embodiment provides a ranging or sidelink positioning method, where the method is performed by a first terminal, and the method includes the following step 81.

In step 81, in response to the ranging or sidelink positioning terminal not supporting the location service function, a discovery operation of the location server terminal is performed to obtain the second predetermined result.

For the description of step 81, reference is made to the description of step 71 and step 72, which will not be repeated here.

It should be noted that those skilled in the art can understand that the methods provided by the embodiments of the present disclosure may be executed alone or together with some methods in the embodiments of the present disclosure or some methods in related art.

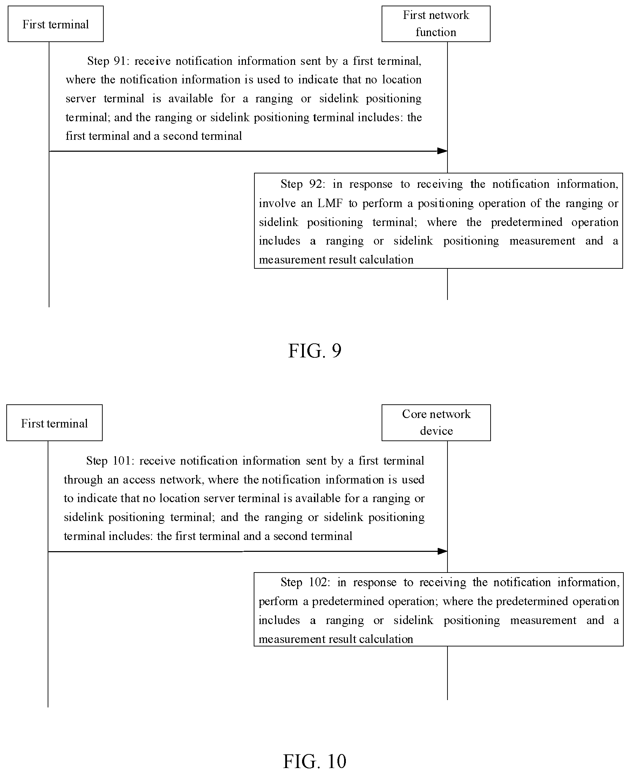

As show in FIG. 9, this embodiment provides a ranging or sidelink positioning method, where the method is performed by a first network function, and the method includes the following step 91 to step 92.

In step 91, notification information sent by a first terminal is received, where the notification information is used to indicate that no location server terminal is available for a ranging or sidelink positioning terminal; and the ranging or sidelink positioning terminal includes: the first terminal and a second terminal.

In step 92, in response to receiving the notification information, an LMF is involved to perform a positioning operation of the ranging or sidelink positioning terminal; where the predetermined operation includes a ranging or sidelink positioning measurement and a measurement result calculation.

Here, the terminal involved in the embodiments of the present disclosure may be, but is not limited to, a mobile phone, a wearable device, a vehicle-mounted terminal, a road side unit (RSU), a smart home terminal, an industrial sensing device and/or a medical device. In some embodiments, the terminal may be a redcap terminal or a new air interface NR terminal of a predetermined version (e.g., the NR terminal of R17).

The base station involved in the present disclosure may be various types of base stations, for example, a base station of the third generation mobile communication (3G) network, a base station of the fourth generation mobile communication (4G) network, a base station of the fifth generation mobile communication (5G) network or other evolved base stations.

The network function involved in the present disclosure may be various types of network functions, for example, a network function of the fifth generation mobile communication (5G) network or other evolved network functions. The network function may be an AMF or an LMF, etc. For example, the first network function may be an AMF.

In one embodiment, the ranging or sidelink positioning request information is sent to the first terminal, where the ranging or sidelink positioning request information may indicate the first terminal and the second terminal. Notification information sent by the first terminal is received, where the notification information is used to indicate that the ranging or sidelink positioning terminal has no location server terminal available. The ranging or sidelink positioning terminal includes: the first terminal and the second terminal. In response to receiving the notification information, an LMF is involved to perform a positioning operation of the ranging or sidelink positioning terminal; where the predetermined operation includes a ranging or sidelink positioning measurement and a measurement result calculation.

In one embodiment, the ranging or sidelink positioning request information is sent to the first terminal, where the ranging or sidelink positioning request information may indicate the first terminal and the second terminal. Notification information sent by the first terminal is received, where the notification information is used to indicate that the ranging or sidelink positioning terminal has no location server terminal available. The ranging or sidelink positioning terminal includes: the first terminal and the second terminal. In response to receiving the notification information, a positioning operation of the ranging or sidelink positioning terminal is performed based on the first terminal, the second terminal and the LMF; where the predetermined operation includes a ranging or sidelink positioning measurement and a measurement result calculation.

In one embodiment, in response to receiving ranging or sidelink positioning request information from a third-party terminal or a core network function, the ranging or sidelink positioning request information is sent to the first terminal, where the ranging or sidelink positioning request information may indicate the first terminal and the second terminal. Notification information sent by the first terminal is received, where the notification information is used to indicate that the ranging or sidelink positioning terminal has no location server terminal available. The ranging or sidelink positioning terminal includes: the first terminal and the second terminal. In response to receiving the notification information, a positioning operation of the ranging or sidelink positioning terminal is performed based on the first terminal, the second terminal and the LMF; where the predetermined operation includes a ranging or sidelink positioning measurement and a measurement result calculation.

In one embodiment, notification information sent by a first terminal is received, where the notification information is used to indicate that there is no location server terminal available for the ranging or sidelink positioning terminal. The ranging or sidelink positioning terminal includes: the first terminal and the second terminal. In response to receiving the notification information, an LMF is involved to perform a positioning operation of the ranging or sidelink positioning terminal; where the predetermined operation includes a ranging or sidelink positioning measurement and a measurement result calculation. The ranging or sidelink positioning operation is performed to obtain a ranging or sidelink positioning result; and information about the ranging or sidelink positioning result is sent to a third-party terminal or a core network function.

It should be noted that those skilled in the art can understand that the methods provided by the embodiments of the present disclosure may be executed alone or together with some methods in the embodiments of the present disclosure or some methods in related art.

As shown in FIG. 10, this embodiment provides a ranging or sidelink positioning method, where the method is performed by a core network device, and the method includes the following step 101 to step 102.

In step 101, notification information sent by a first terminal is received through an access network, where the notification information is used to indicate that no location server terminal is available for a ranging or sidelink positioning terminal; and the ranging or sidelink positioning terminal includes: the first terminal and a second terminal.

In step 102, in response to receiving the notification information, a predetermined operation is performed; where the predetermined operation includes a ranging or sidelink positioning measurement and a measurement result calculation.

Here, the terminal involved in the embodiments of the present disclosure may be, but is not limited to, a mobile phone, a wearable device, a vehicle-mounted terminal, a road side unit (RSU), a smart home terminal, an industrial sensing device and/or a medical device. In some embodiments, the terminal may be a redcap terminal or a new air interface NR terminal of a predetermined version (e.g., the NR terminal of R17).

The base station involved in the present disclosure may be various types of base stations, for example, a base station of the third generation mobile communication (3G) network, a base station of the fourth generation mobile communication (4G) network, a base station of the fifth generation mobile communication (5G) network or other evolved base stations.

The core network involved in the present disclosure may include various network functions, and the network function may be various types of network functions, for example, a network function of a fifth generation mobile communication (5G) network or other evolved network functions. The network function may be an AMF or LMF, etc. For example, the first network function may be an AMF.

In one embodiment, in response to the first network function receiving ranging or sidelink positioning request information from a third-party terminal or a core network function through an access network, the ranging or sidelink positioning request information is sent to the first terminal through the access network. The first network function receives notification information sent by the first terminal through the access network, where the notification information is used to indicate that the ranging or sidelink positioning terminal has no location server terminal available. The ranging or sidelink positioning terminal includes: the first terminal and the second terminal. In response to the first network function receiving the notification information, the first network function performs a predetermined operation; where the predetermined operation includes a ranging or sidelink positioning measurement and a measurement result calculation, and a ranging or sidelink positioning result is obtained. The first network function sends information about the ranging or sidelink positioning result to the third-party terminal or the core network function through the access network.

It should be noted that those skilled in the art can understand that the methods provided by the embodiments of the present disclosure may be executed alone or together with some methods in the embodiments of the present disclosure or some methods in related art.

In order to better understand the embodiments of the present disclosure, the technical solution of the present disclosure is further described below through the following two exemplary embodiments.

It should be noted that during the ranging/sidelink positioning process, location server UE functionalities needs to be performed (i.e., receiving/sending a ranging/sidelink positioning request/response and a result calculation from/to the UE or LMF). If neither the ranging/sidelink positioning UE (i.e., a reference UE nor a target UE) supports the location server UE functionalities, a location server UE needs to be discovered. The ranging/sidelink positioning UE interacts with the location server UE to transmit measurement data and results. However, if no location server UE in proximity can be discovered, the ranging/sidelink positioning UE has to request network assistance to select a suitable LMF for result calculation. In a network-based solution, the ranging/sidelink positioning UE receives a ranging or sidelink positioning request from its serving AMF. If the AMF receives a ranging/sidelink positioning request from the LMF, a third-party UE, a GMLC or a NEF, it sends a ranging/sidelink positioning UE request to the UE.

In a non-network-based solution, the ranging/sidelink positioning UE directly receives the measurement/sidelink positioning request from a third-party UE.

In both above scenarios, when the ranging/sidelink positioning UE receives a positioning request, it starts to discover another ranging/sidelink positioning UE. After the other UE is successfully discovered, they exchange capability information with each other.

If any of the terminals supports the location server UE functionalities, further measurements and result calculations will be performed only by the two UEs. Otherwise, the ranging/sidelink positioning UE uses a Mode A or Mode B proximity communication service (ProSe) discovery to discover the location server UE, by indicating the capability of the location server UE as additional information for the discovery. The ranging/sidelink positioning UE may be provided or pre-configured with a location server terminal identifier. In this case the ranging/sidelink positioning UE discovers the location server UE based on the pre-configured identifier. If a plurality of location server UEs are discovered, a location server UE is selected based on their capabilities, the pre-configured location server UE ID, the distances, and the signaling strengths.

### Example 1:

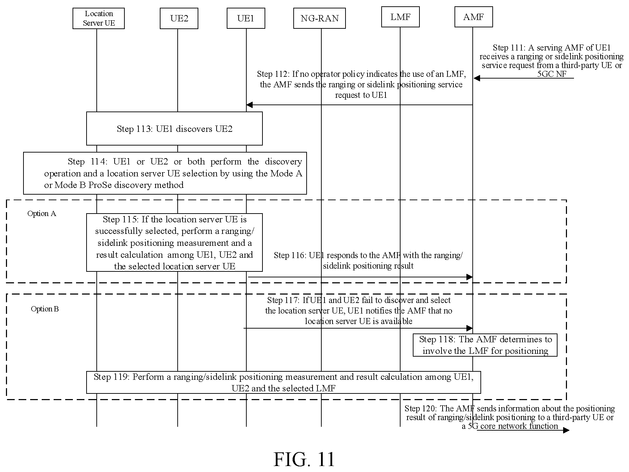

As shown in FIG. 11, this embodiment provides a ranging or sidelink positioning method, where the method includes the following step 111 to step 120.

In step 111, a serving AMF of UE1 receives a ranging or sidelink positioning service request (or ranging or sidelink positioning service request information) from a third-party UE or 5GC NF.

In step 112, if no operator policy indicates the use of an LMF, the AMF sends a ranging or sidelink positioning service request to UE1.

In step 113, UE1 discovers UE2. UE1 and UE2 exchange their capabilities to determine whether they need to use the location server UE, that is:
if neither UE1 nor UE2 supports location server functionalities, UE1 or UE2 needs to discover a location server UE;
otherwise, there is no need to discover the location server UE, and step 35 is performed.

In step 114, UE1 or UE2 or both perform a discovery operation by using the Mode A or Mode B ProSe discovery method, and discover the location server UE by indicating the capability of the location server UE as additional information for discovery. If a plurality of location server UEs are discovered, a location server UE is selected based on their capabilities, the pre-configured location server UE ID, the distances, and the signaling strengths.

Option A (Start) corresponds to a dotted box where Option A is located in the figure.

In step 115, if the location server UE is successfully selected, a ranging or sidelink positioning measurement and a result calculation (if necessary) are performed among UE1, UE2 and the selected location server UE.

In step 116, UE1 responds to the AMF with the ranging or sidelink positioning result.

### Option A (End)

Option B (Start) corresponds to a dotted box where Option B is located in the figure.

In step 117, if UE1 and UE2 fail to discover and select the location server UE, UE1 notifies the AMF that no location server UE is available.

In step 118, the AMF determines to involve the LMF for positioning.

In step 119, a ranging or sidelink positioning measurement and result calculation is performed among UE1, UE2 and the selected LMF.

In step 120, the AMF sends information about the positioning result of ranging or sidelink positioning to a third-party UE or a 5G core network function.

### Option B (End)

It should be noted that those skilled in the art can understand that the methods provided by the embodiments of the present disclosure may be executed alone or together with some methods in the embodiments of the present disclosure or some methods in related art.

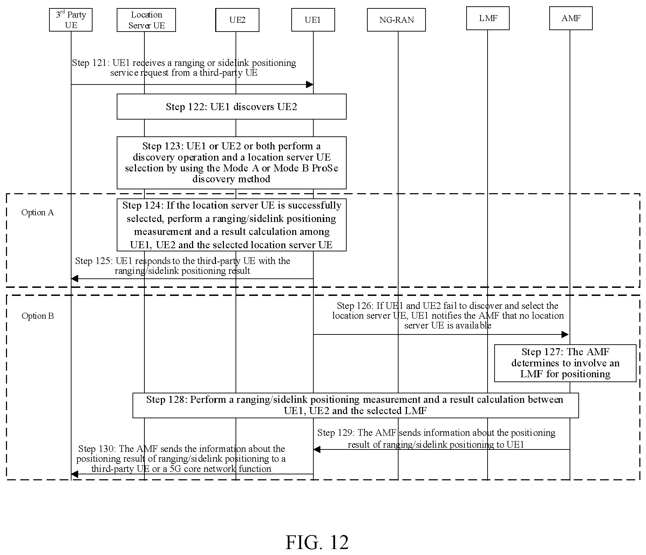

As shown in FIG. 12, this embodiment provides a ranging or sidelink positioning method, where the method includes the following step 121 to step 130.

In step 121, UE1 receives a ranging or sidelink positioning service request (or ranging or sidelink positioning service request information) from a third-party UE.

In step 122, UE1 discovers UE2. UE1 and UE2 exchange their capabilities to determine whether they need to use a location server UE, that is:
if neither UE1 nor UE2 supports the location server functionalities, UE1 or UE2 needs to discover the location server UE;
otherwise, there is no need to discover the location server UE, and step 35 is performed.

In step 123, UE1 or UE2 or both perform a discovery operation by using the Mode A or Mode B ProSe discovery method, and discover the location server UE by indicating the capability of the location server UE as additional information for discovery. If a plurality of location server UEs are discovered, a location server UE is selected based on their capabilities, the pre-configured location server UE ID, distances, and the signaling strengths.

Option A (Start) corresponds to a dotted box where Option A is located in the figure.

In step 124, if the location server UE is successfully selected, a ranging or sidelink positioning measurement and a result calculation (if necessary) are performed among UE1, UE2 and the selected location server UE.

In step 125, UE1 responds to the third-party UE with the ranging or sidelink positioning result.

### Option A (End)

Option B (Start) corresponds to a dotted box where Option B is located in the figure.

In step 126, if UE1 and UE2 fail to discover and select the location server UE, UE1 notifies the AMF that no location server UE is available.

In step 127, the AMF determines to involve an LMF for positioning.

In step 128, a ranging or sidelink positioning measurement and a result calculation are performed among UE1, UE2 and the selected LMF.

In step 129, the AMF sends the information about the positioning result of ranging or sidelink positioning to UE1.

In step 130, the AMF sends information about the positioning result of ranging or sidelink positioning to a third-party UE or a 5G core network function.

### Option B (End)

It should be noted that those skilled in the art can understand that the methods provided by the embodiments of the present disclosure may be executed alone or together with some methods in the embodiments of the present disclosure or some methods in related art.

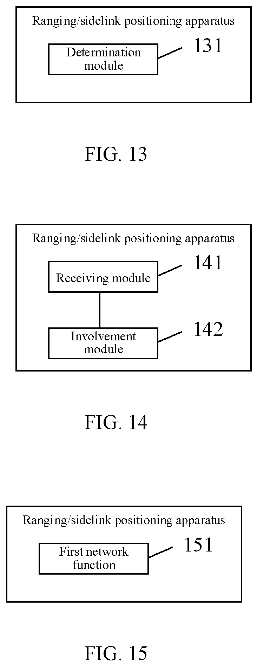

As shown in FIG. 13, this embodiment provides a ranging or sidelink positioning apparatus, where the apparatus includes:
a determination module 131, configured to determine whether to send notification information to a first network function based on a first predetermined result and/or a second predetermined result.

The notification information is used to indicate that no location server terminal is available for the ranging or sidelink positioning terminal. The first predetermined result includes: a result that the ranging or sidelink positioning terminal supports or does not support a location server function. The second predetermined result includes: a result that the ranging or sidelink positioning terminal discovers or fails to discover the location server terminal. The ranging or sidelink positioning terminal includes: the first terminal and a second terminal.

It should be noted that those skilled in the art can understand that the methods provided by the embodiments of the present disclosure may be executed alone or together with some methods in the embodiments of the present disclosure or some methods in related art.

As shown in FIG. 14, this embodiment provides a ranging or sidelink positioning apparatus, where the apparatus includes:
a receiving module 141, configured to receive notification information sent by a first terminal, where the notification information is used to indicate that no location server terminal is available for a ranging or sidelink positioning terminal; and the ranging or sidelink positioning terminal includes: the first terminal and a second terminal; and
an involvement module 142, configured to: in response to receiving the notification information, involve the LMF to perform a positioning operation of the ranging or sidelink positioning terminal; where the predetermined operation includes a ranging or sidelink positioning measurement and a measurement result calculation.

It should be noted that those skilled in the art can understand that the methods provided by the embodiments of the present disclosure may be executed alone or together with some methods in the embodiments of the present disclosure or some methods in related art.

As shown in FIG. 15, this embodiment provides a ranging or sidelink positioning apparatus, where the apparatus includes:
a first network function 151, configured to:
receive notification information sent by a first terminal through an access network, where the notification information is used to indicate that no location server terminal is available for a ranging or sidelink positioning terminal; and the ranging or sidelink positioning terminal includes: the first terminal and a second terminal; and
in response to receiving the notification information, perform a predetermined operation; where the predetermined operation includes a ranging or sidelink positioning measurement and a measurement result calculation.

It should be noted that those skilled in the art can understand that the methods provided by the embodiments of the present disclosure may be executed alone or together with some methods in the embodiments of the present disclosure or some methods in related art.

A communication device is provided in embodiments of the present disclosure, and includes:
a processor;
a memory, configured to store an executable instruction of the processor;
where the processor is configured to implement the method applied to any embodiment of the present disclosure when executing the executable instruction.

The processor may include various types of storage media, which are non-temporary computer storage media, and can continue to memorize and store the information on the communication device after power failure.

The processor may be connected with the memory through a bus or the like for reading an executable program stored on the memory.

The embodiments of the present disclosure also provide a computer storage medium, where the computer storage medium stores a computer executable program, and the executable program, when executed by a processor, realizes the method of any embodiment of the present disclosure.

With respect to the apparatuses in the above embodiments, the specific manners for performing operations for individual modules therein have been described in detail in the embodiments regarding the methods, which will not be elaborated herein.

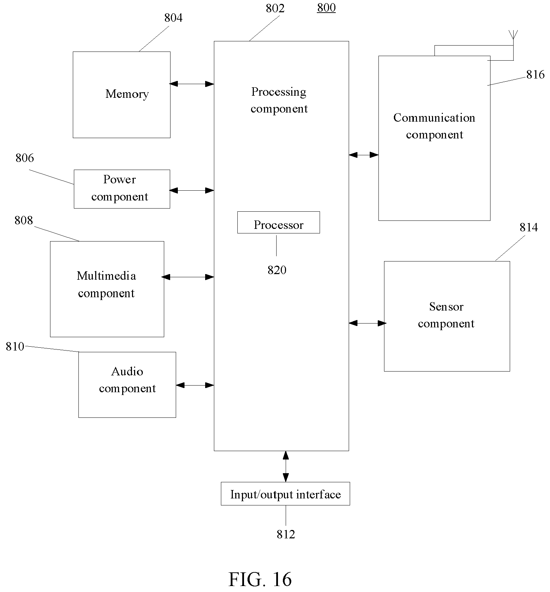

As shown in FIG. 16, one embodiment of the present disclosure provides a structure of a terminal.

Referring to a terminal 800 shown in FIG. 16, this embodiment provides the terminal 800, which may be a mobile phone, a computer, a digital broadcast terminal, a messaging device, a gaming console, a tablet, a medical device, exercise equipment, a personal digital assistant, and the like.

Referring to FIG. 16, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the device 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal 800, for performing the above-described methods. For example, the non-transitory computer-readable storage medium may be a ROM, a RAM, a CD-ROM, a magnetic tape, a floppy disc, an optical data storage device, and the like.

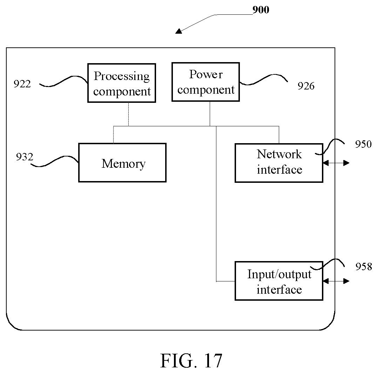

As shown in FIG. 17, an embodiment of the present disclosure illustrates a structure of a base station. For example, the base station 900 may be provided as a network side device. Referring to FIG. 17, the base station 900 includes a processing component 922, which further includes one or more processors, and a memory resource represented by a memory 932 for storing instructions executable by the processing component 922, such as an application program. The application program stored in the memory 932 may include one or more modules, each corresponding to a set of instructions. In addition, the processing component 922 is configured to execute instructions to perform any of the aforementioned methods applied to the base station.

The base station 900 may further include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as a Windows Server^{™}, a Mac OS X^{™}, a Unix^{™}, a Linux^{™}, a Free BSD^{™} or the like.

Other embodiments of the present disclosure will be apparent to those skilled in the art from consideration of the specification and practice of the contents disclosed here. The present disclosure is intended to cover any variations, uses, or adaptations of the present disclosure, which follows the general principles thereof and includes the common knowledge or habitual technical means in this technical field that is not disclosed in the present disclosure. The specification and embodiments are considered as exemplary only, with a true scope and spirit of the present disclosure being indicated by the appending claims.

It will be appreciated that the present disclosure is not limited to the exact construction that has been described above and illustrated in the accompanying drawings, and various modifications and changes can be made without departing from the scope thereof. The scope of the present disclosure is only limited by the appended claims.

## Claims

1. A ranging or sidelink positioning method, wherein the method is performed by a first terminal, and the method comprises:
determining whether to send notification information to a first network function based on a first predetermined result and/or a second predetermined result;
wherein the notification information is configured to indicate that no location server terminal is available for a ranging or sidelink positioning terminal; the first predetermined result comprises: a result that the ranging or sidelink positioning terminal supports or does not support a location server function; the second predetermined result comprises: a result that the ranging or sidelink positioning terminal discovers or fails to discover the location server terminal; and the ranging or sidelink positioning terminal comprises: the first terminal and a second terminal.

2. The method according to claim 1, wherein the first network function is an access and mobility management function (AMF).

3. The method according to claim 1, wherein determining whether to send the notification information to the first network function based on the first predetermined result and/or the second predetermined result comprises:
in response to the ranging or sidelink positioning terminal not supporting the location server function and the ranging or sidelink positioning terminal not discovering the location server terminal, sending the notification information to the first network function.

4. The method according to claim 3, wherein the method further comprises:
performing a predetermined operation among the first terminal, the second terminal and a second network function to obtain a ranging or sidelink positioning result;
wherein the predetermined operation comprises a ranging or sidelink positioning measurement and a measurement result calculation.

5. The method according to claim 4, wherein the second network function is a location management function (LMF).

6. The method according to claim 1, wherein the method further comprises:
in response to the ranging or sidelink positioning terminal supporting the location server function, performing a predetermined operation between the first terminal and the second terminal to obtain a ranging or sidelink positioning result;
and/or,
in response to the ranging or sidelink positioning terminal not supporting the location server function and the ranging or sidelink positioning terminal discovering the location server terminal, performing a predetermined operation among the first terminal, the second terminal and the location server terminal to obtain the ranging or sidelink positioning result;
wherein the predetermined operation comprises a ranging or sidelink positioning measurement and a measurement result calculation.

7. The method according to claim 4 or 6, wherein the method further comprises:
sending information about the ranging or sidelink positioning result to the first network function;
or,
sending information about the ranging or sidelink positioning result to a third-party terminal.

8. The method according to claim 1, wherein the method further comprises:
in response to receiving ranging or sidelink positioning request information sent by the first network function or ranging or sidelink positioning request information of a third-party terminal, discovering the second terminal; and
determining whether the ranging or sidelink positioning terminal supports the location server function to obtain the first predetermined result.

9. The method according to claim 8, wherein the method further comprises:
in response to the ranging or sidelink positioning terminal not supporting a location service function, performing a discovery operation of the location server terminal to obtain the second predetermined result.

10. The method according to claim 9, wherein performing the discovery operation of the location server terminal comprises:
performing the discovery operation based on a Mode A proximity communication service (ProSe) discovery;
or,
performing the discovery operation based on a Mode B proximity communication service (ProSe) discovery;
wherein the discovery operation is a discovery operation for the location server terminal.

11. The method according to claim 9, wherein performing the discovery operation of the location server terminal comprises:
sending discovery request information, wherein the discovery request information indicates capability information of a location server terminal to be discovered; and
receiving discovery response information sent by the location server terminal, wherein the location server terminal has a capability indicated by the capability information.

12. The method according to claim 9, wherein the method further comprises:
in response to discovering a plurality of location server terminals, selecting the location server terminal for ranging or sidelink positioning based on predetermined information;
wherein the predetermined information comprises at least one of the following:
capability information of the location server terminal;
a pre-configured identity identifier (ID) of the location server terminal;
a distance between the location server terminal and the ranging or sidelink positioning terminal; and
a signal strength between the location server terminal and the ranging or sidelink positioning terminal.

13. A ranging or sidelink positioning method, wherein the method is performed by a first network function, wherein the method comprises:
receiving notification information sent by a first terminal, wherein the notification information is configured to indicate that no location server terminal is available for a ranging or sidelink positioning terminal; and the ranging or sidelink positioning terminal comprises: the first terminal and a second terminal; and
in response to receiving the notification information, involving a location management function (LMF) to perform a predetermined operation of the ranging or sidelink positioning terminal; wherein the predetermined operation comprises a ranging or sidelink positioning measurement and a measurement result calculation.

14. The method according to claim 13, wherein the method further comprises:
in response to receiving ranging or sidelink positioning request information from a third-party terminal or a core network function, sending the ranging or sidelink positioning request information to the first terminal.

15. The method according to claim 13, wherein the method further comprises:
performing the predetermined operation of the ranging or sidelink to obtain a ranging or sidelink positioning result; and
sending information about the ranging or sidelink positioning result to a third-party terminal or a core network function.

16. A ranging or sidelink positioning method, wherein the method is performed by a core network device, and the method comprises:
receiving notification information sent by a first terminal through an access network, wherein the notification information is configured to indicate that no location server terminal is available for a ranging or sidelink positioning terminal; and the ranging or sidelink positioning terminal comprises: the first terminal and a second terminal; and
in response to receiving the notification information, performing a predetermined operation; wherein the predetermined operation comprises a ranging or sidelink positioning measurement and a measurement result calculation.

17. The method according to claim 16, wherein performing the predetermined operation comprises:
performing, by a location management function (LMF) of the core network, the predetermined operation.

18. The method according to claim 16, wherein the method further comprises:
in response to receiving ranging or sidelink positioning request information from a third-party terminal or a core network function triggering ranging or sidelink positioning, sending the ranging or sidelink positioning request information to the first terminal through the access network.

19. The method according to claim 16, wherein the method further comprises:
sending information about a ranging or sidelink positioning result to a third-party terminal through the access network.

20. A ranging or sidelink positioning apparatus, wherein the apparatus comprises:
a determination module, configured to determine whether to send notification information to a first network function based on a first predetermined result and/or a second predetermined result;
wherein the notification information is configured to indicate that no location server terminal is available for a ranging or sidelink positioning terminal; the first predetermined result comprises: a result that the ranging or sidelink positioning terminal supports or does not support a location server function; the second predetermined result comprises: a result that the ranging or sidelink positioning terminal discovers or fails to discover a location server terminal; and the ranging or sidelink positioning terminal comprises: the first terminal and a second terminal.

21. A ranging or sidelink positioning apparatus, wherein the apparatus comprises:
a receiving module, configured to receive notification information sent by a first terminal, wherein the notification information is configured to indicate that no location server terminal is available for a ranging or sidelink positioning terminal; and the ranging or sidelink positioning terminal comprises: the first terminal and a second terminal; and
an involvement module, configured to: in response to receiving the notification information, involve a location management function (LMF) to perform a positioning operation of the ranging or sidelink positioning terminal; wherein the predetermined operation comprises a ranging or sidelink positioning measurement and a measurement result calculation.

22. A ranging or sidelink positioning apparatus, wherein the apparatus comprises:
a first network function, configured to:
receive notification information sent by a first terminal through an access network, wherein the notification information is configured to indicate that no location server terminal is available for a ranging or sidelink positioning terminal; and the ranging or sidelink positioning terminal comprises: the first terminal and a second terminal; and
in response to receiving the notification information, perform a predetermined operation; wherein the predetermined operation comprises a ranging or sidelink positioning measurement and a measurement result calculation.

23. A communication device, comprising:
a memory; and
a processor, connected to the memory, configured to execute computer-executable instructions stored on the memory, and being capable of implementing the method according to any one of claims 1 to 12, 13 to 15, or 16 to 18.

24. A computer storage medium, storing computer-executable instructions which, after being executed by a processor, are capable of implementing the method according to any one of claims 1 to 12, 13 to 15, or 16 to 18.
